(19) Europäisches Patentamt

European Patent Office

Office européen des brevets

(11) **EP 0 707 936 B1**

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(51) Int Cl.⁷: **B29C 45/77**

(21) Anmeldenummer: **95810562.9**

(22) Anmeldetag: **11.09.1995**

(54) **Verfahren zur Bestimmung des Umschaltpunktes bei der Herstellung eines Spritzgussteils**

Process to determine the switch-over point in the production of an injection-moulded part

Procédé pour déterminer le point de transition lors du moulage par injection d'un objet

(84) Benannte Vertragsstaaten:
**DE FR GB**

(30) Priorität: **19.10.1994 CH 313594**

(43) Veröffentlichungstag der Anmeldung:
**24.04.1996 Patentblatt 1996/17**

(73) Patentinhaber: **K.K. HOLDING AG**
**CH-8408 Winterthur (CH)**

(72) Erfinder:
• **Bader, Christopherus**
**CH-8413 Neftenbach (CH)**

• **Greco, Luigi**
**CH-8570 Weinfelden (CH)**

(56) Entgegenhaltungen:
EP-A- 0 264 453        EP-A- 0 477 527
EP-A- 0 525 670        EP-A- 0 535 274
DE-A- 4 041 229        DE-A- 4 129 559
DE-A- 4 140 392

• PATENT ABSTRACTS OF JAPAN vol. 017, no.
433 (M-1461), 11.August 1993 & JP 05 096591 A
(SUMITOMO HEAVY IND LTD), 20.April 1993,

• PATENT ABSTRACTS OF JAPAN vol. 096, no.
003, 29.März 1996 & JP 07 304079 A (SODICK CO
LTD), 21.November 1995,

**Beschreibung**

Die Erfindung betrifft ein Verfahren zur Bestimmung eines Umschaltpunktes bei der Herstellung eines Spritzgussteils gemäss dem Oberbegriff des Anspruchs 1.

Bei der Herstellung von Spritzgussteilen, sei es aus Kunststoff, Metall oder keramischen Werkstoffen, wird jeweils in einen Hohlraum einer Spritzgussform plastisches Material mittels einer geeigneten Einspritzeinrichtung eingespritzt, das dann durch Kühlen verfestigt oder ausgehärtet wird. Anschliessend wird die Form geöffnet und das Spritzgussteil ausgeworfen. Beim Einspritzen folgen zwei Phasen aufeinander. Während einer Füllphase wird die Form gefüllt, wobei die Einspritzeinrichtung gemäss einem Füllprogramm gewöhnlich so gesteuert wird, dass die Förderrate als Funktion der Zeit bestimmte Sollwertvorgaben erfüllt. Sobald die Form voll ist, wird die Einspritzeinrichtung während einer Nachdruckphase gewöhnlich so geregelt, dass gemäss einem Nachdruckprogramm der Druck im Hohlraum bestimmte Sollwerte erreicht, die ebenfalls zeitabhängig sein können.

Es ist von grosser Bedeutung, dass der Umschaltpunkt, d. h. der Zeitpunkt, zu dem vom Füllprogramm auf das Nachdruckprogramm umgeschaltet wird, richtig bestimmt wird und möglichst genau mit dem Zeitpunkt zusammenfällt, zu dem der Hohlraum gerade vollständig gefüllt ist. Wird zu früh umgeschaltet, so besteht die Gefahr, dass der Hohlraum zu diesem Zeitpunkt nicht vollständig gefüllt wird und ein unkontrolliertes Füllen unter Nachdruck erfolgt, woraus ein für Verzug unter thermischer Belastung anfälliges Spritzgussteil resultiert. Erfolgt die Umschaltung zu spät, so wird im Hohlraum ein zu hoher Druck erreicht und es resultiert ein Spritzgussteil, das wegen innerer Spannungen spröd und bruchgefährdet ist.

Es ist also entscheidend, dass die vollständige Füllung des Hohlraums erkannt wird, bevor es zu einem drastischen Druckanstieg kommt. Bei einem bekannten Verfahren (DE-A-41 40 392) gemäss Oberbegriff von Anspruch 1 wird versucht, dieses Problem zu lösen, indem aus Messwerten, die bei in festen zeitlichen Abständen durchgeführten Messungen des Drucks im Hohlraum gewonnen werden, die zweite Ableitung des Drucks als Funktion der Zeit annähernd bestimmt wird und, falls dieser Wert einen festen Schwellwert überschreitet, auf Erreichen des Umschaltpunktes geschlossen und auf das Nachdruckprogramm umgeschaltet wird.

In der JP-A-05096591 wird die Anwendung der Fuzzy"Logik" für die Steuerung und Regelung eine Spritzgiessmaschine vorgeschlagen, ohne dass jedoch eine Innendruckmessung in der Kavität der Spritzgiessform durchgeführt und eine genaue Bestimmung des Umschaltpunktes durchgeführt wird.

In der nach dem Prioritäts- und dem Anmeldetag der vorliegenden Anmeldung veröffentlichten JP-A 07304079 wird eine Regelanordnung für die Einspritzgeschwindigkeit beschrieben, wobei der Umschaltpunkt mit Hilfe der unscharfen Logik ermittelt wird. Auch bei dieser Anordnung wird der Werkzeuginnendruck weder gemessen noch zur Regelung der Einspritzgeschwindigkeit herangezogen.

Die Regelung der Schneckengeschwindigkeit einer Spritzgiessmaschine auf einen vorgegebenen Sollwert in Abhängigkeit von der Schneckenposition ist Inhalt des EP-A-0.264.453, ohne dass auch hier der Werkzeuginnendruck gemessen wird, oder die Methoden der Fuzzy-Logik angewendet werden.

Die EP-A-0.525.670 betrifft eine Anordnung und ein Verfahren der Fuzzy-Logik, unabhängig von dem Einsatzgebiet. Auf das spezielle Problem der Ermittlung des Umschaltpunktes beim Spritzgiessen wird daher nicht eingegangen.

Die Lösung nach der vorstehend diskutierten DE-A-4140392 hat sich für eine genaue Bestimmung des Umschaltpunktes als nicht genügend zuverlässig erwiesen, da auch vor der vollständigen Füllung des Hohlraums der Spritzgussform beträchtliche Schwankungen des Drucks auftreten können, die bewirken, dass die zweite Ableitung den Schwellwert kurzzeitig überschreitet, was eine verfrühte Umschaltung auslöst. Dem kann im Rahmen des bekannten Verfahrens nur durch einen hohen Schwellwert entgegengewirkt werden, was jedoch die Gefahr, dass die vollständige Füllung der Form zu spät erkannt wird und die Umschaltung nicht rechtzeitig erfolgt, erhöht.

Der Erfindung liegt daher die Aufgabe zugrunde, ein gatttungsgemässes Verfahren anzugeben, das die vollständige Füllung des Hohlraums sicher und rechtzeitig feststellt, dabei aber gegen Störungen durch zufällig Druckschwankungen in der Füllphase stabil ist.

Diese Aufgabe wird durch die Erfindung, wie sie im Anspruch 1 gekennzeichnet ist, gelöst. Zweckmässige Weiterbildungen der Erfindung sind Gegenstand der abhängigen Ansprüche. Die Erfindung schafft ein Verfahren zur Bestimmung des Umschaltpunktes, das sicher und zuverlässig funktioniert und die Entstehung fehlerhafter Spritzgussteile durch zu frühes oder zu spätes Umschalten weitgehend ausschliesst.

Im folgenden wird die Erfindung anhand von Figuren, welche nur ein Ausführungsbeispiel darstellen, näher erläutert. Es zeigen

Fig. 1      eine Spritzgussvorrichtung zur Herstellung eines Spritzgussteils, welche zur Durchführung des erfindungsgemässen Verfahrens geeignet ist,

Fig. 2a,b      eine Einspritzeinrichtung bzw. den Druck im Hohlraum als Funktion der Zeit während eines ersten Teils der Füllphase,

Fig. 3a,b      Darstellungen entsprechend Fig. 2a,b während bzw. einschliesslich eines zweiten Teils der Füllphase,

Fig. 4a,b     Darstellungen entsprechend Fig. 2a,b beim Erreichen des Umschaltpunkts bzw. einschliesslich einer Umgebung des Umschaltpunkts,

Fig. 5a,b     Darstellungen entsprechend Fig. 2a,b während bzw. einschliesslich der Nachdruckphase,

Fig. 6     diagrammatisch die algorithmische Verarbeitung von Messwerten beim erfindungsgemässen Verfahren,

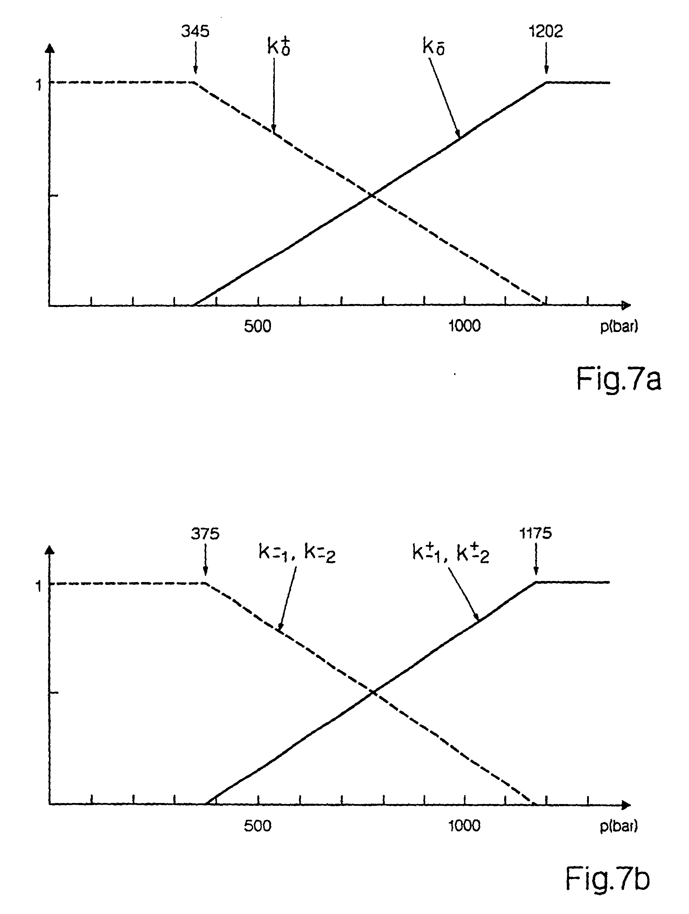

Fig. 7a,b     Klassifikationsfunktionen für den aktuellen Messwert bzw. die zwei letzten vor demselben erhobenen Messwerte und

Fig. 8     Auswertungsfunktionen für die Bestimmung eines Schaltwertes.

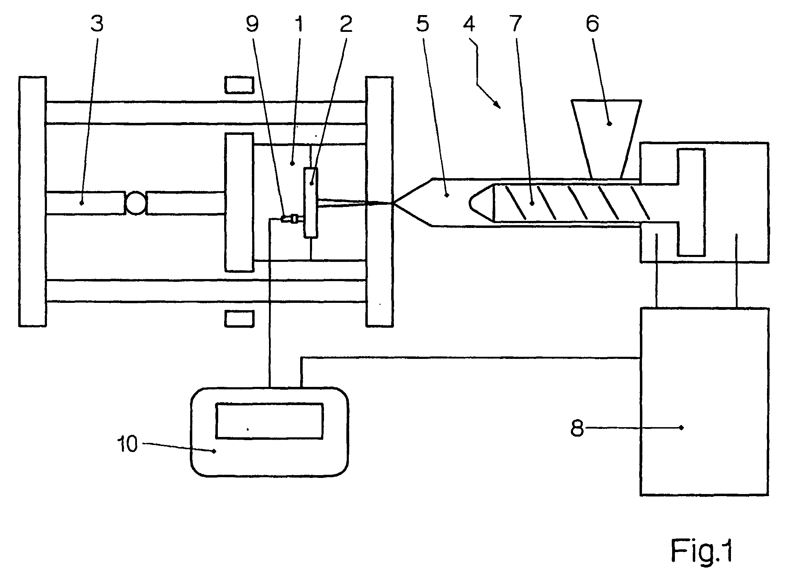

Die Spritzgussvorrichtung von Fig. 1 weist eine Form 1 aus Metall auf, welche einen Hohlraum 2 umschliesst, in dem das Spritzgussteil geformt wird. Die Form 1 wird von einer z. B. hydraulischen Schliesseinheit 3 geschlossen und geöffnet. Zur Vorbereitung und zum Einspritzen von Spritzgussmasse ist eine Einspritzeinrichtung 4 vorgesehen, welche einen Spritzzylinder 5 umfasst, an dessen Oberseite ein Trichter 6 zur Einführung von Spritzgussmaterial mündet und in welchem eine Schnecke 7 axial verschiebbar und drehbar angeordnet ist. Die Bewegungen der Schnecke 7 werden von einer Steuerung 8 bestimmt. In der Wand des Hohlraums 2 ist ein Drucksensor 9 angeordnet, welcher mit einem Regler 10 verbunden ist, der seinerseits mit der Steuerung 8 in Verbindung steht. Der Drucksensor 9 könnte auch hinter einem Auswerferstift angeordnet sein, jedenfalls befindet er sich im Hohlraum 2.

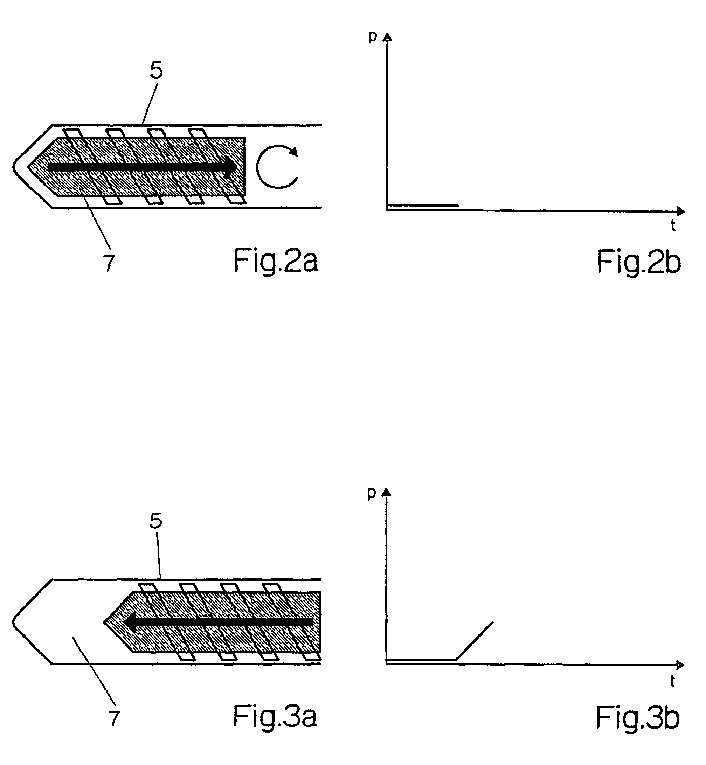

Zu Beginn eines Spritzgiesszyklus wird durch den Trichter 6 Spritzgussmasse, üblicherweise in Form eines Granulats, in den Spritzzylinder 5 eingebracht und durch rasche Drehung der Schnecke 7 bei gleichzeitiger Rückwärtsbewegung derselben aufgeschmolzen (Fig. 2a). Im Hohlraum 2 der Form 1 wird in diesem ersten Teil der Füllphase noch kein Druck aufgebaut (Fig. 2b).

Zu Beginn des anschliessenden zweiten Teils der Füllphase ist die Spitze der Schnecke 7 von der Spitze des Spritzzylinders 5 beabstandet, der vordere Bereich desselben ist mit aufgeschmolzener Spritzgussmasse gefüllt (Fig. 3a). Im Verlauf des besagten zweiten Teils wird die Schnecke 7 nach vorne geschoben und der Hohlraum 2 mit Spritzgussmasse aufgefüllt. Die Vorwärtsbewegung wird nach einem Füllprogramm gesteuert, das die Förderrate als Funktion der Zeit vorgibt. Der Druck im Hohlraum 2 steigt an (Fig. 3b).

Sobald der Hohlraum 2 vollständig gefüllt ist, endet die Füllphase und beginnt die Nachdruckphase.

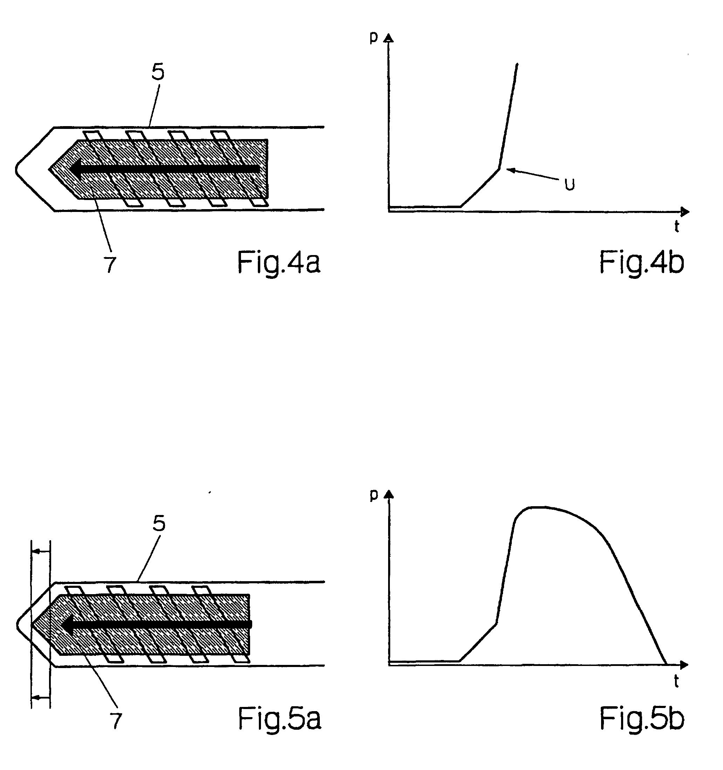

Die Steigung des Drucks als Funktion der Zeit steigt sprunghaft an (Fig. 4a, 4b).

Möglichst genau zu diesem Zeitpunkt, d. h. am idealen Umschaltpunkt U, wird vom Füllprogramm auf ein Nachdruckprogramm umgeschaltet, bei welchem der Druckverlauf im Hohlraum 2 nach bestimmten Vorgaben geregelt wird. Zu diesem Zweck wird der Druck durch den Drucksensor 9 (Fig. 1) überwacht und das Messergebnis an den Regler 10 weitergeleitet, der seinerseits im Sinne der Einhaltung eines vorgegebenen Solldrucks auf die Steuerung 8 einwirkt, welche die axiale Position der Schnecke 7 steuert, die in diesem Stadium gewöhnlich noch leicht vorgeschoben wird (Fig. 5a). Der Solldruck kann eine Funktion der Zeit sein (Fig. 5b), welche nach steilem Anstieg wieder auf den Ursprungswert absinkt, da sich die Spritzgussmasse abkühlt und zusammenzieht.

Wie bereits ausgeführt, ist die Bestimmung des Umschaltpunktes zwischen der Füllphase und der Nachdruckphase von entscheidender Bedeutung für die Qualität des Spritzgussteils. Zum Zweck dieser Bestimmung wird bereits in der Füllphase der Druck im Hohlraum 2 durch den Drucksensor 9 überwacht und in regelmässigen Abständen, z. B. alle 10 msec, ein Messwert an den Regler 10 übermittelt. Nach einer Messung wird der aktuelle Messwert $p_0$ zusammen mit den vor 10 bzw. 20 msec abgenommenen Messwerten $p_{-1}$ bzw. $p_{-2}$ zusammen verarbeitet. Nach 10 msec wird jeweils ein neuer aktueller Messwert $p_0$ bestimmt, während der bisherige aktuelle Messwert $p_0$ zum Messwert $p_{-1}$ und dieser zum Messwert $p_{-2}$ wird.

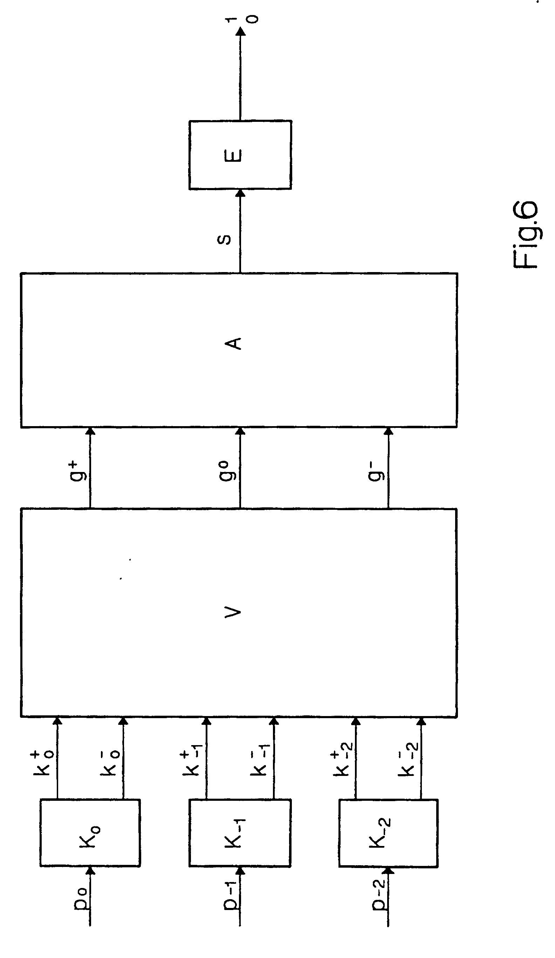

Die algorithmische Verarbeitung der Messwerte $p_0$, $p_{-1}$ und $p_{-2}$ erfolgt (Fig. 6) in einer Recheneinheit im Regler 10 nach den Methoden der unscharfen Logik (fuzzy logic) in mehreren Stufen. Zuerst werden in Klassifizierungsstufen $K_0$, $K_{-1}$ und $K_{-2}$ aus jedem der Messwerte $p_0$, $p_{-1}$ und $p_{-2}$ jeweils zwei Klassifizierungsgrössen abgeleitet (fuzzyfication), indem erste und zweite Klassifizierungsfunktionen $k_0^+$, $k_0^-$, $k_{-1}^+$, $k_{-1}^-$ bzw. $k_{-2}^+$, $k_{-2}^-$ jeweils auf die Messwerte $p_0$, $p_{-1}$ bzw. $p_{-2}$ angewandt werden. Die erste Klassifizierungsfunktion $k_0^+$ hat bis zu einem unteren Grenzdruck von 345 bar den Wert 0 und steigt dann linear an, bis sie bei 1202 bar den Wert 1 erreicht. Die zweite Klassifizierungsfunktion ist zur ersten komplementär, d. h. sie addiert sich mit derselben zu einer Konstanten, im vorliegenden Fall 1.

Die erste Klassifizierungsfunktion $k_{-1}^+$ für den Messwert $p_{-1}$ entspricht qualitativ der bereits beschriebenen Klassifizierungsfunktion $k_0^+$ für den aktuellen Messwert $p_0$, nur steigt sie ab 375 bar an und erreicht bei 1175 bar den Wert 1. Die zweite Klassifizierungsfunktion $k_{-1}^-$ ist wiederum zur ersten komplementär. Die Klassifizierungsfunktionen $k_{-2}^+$ und $k_{-2}^-$ für den Messwert $p_{-2}$ entsprechen im vorliegend beschriebenen Fall genau denen für den Messwert $p_{-1}$.

Die sich aus der Auswertung der Klassifizierungsfunktionen ergebenden Klassifizierungsgrössen $k_0^+(p_0)$, $k_0^-(p_0)$, $k_{-1}^+(p_{-1})$, $k_{-1}^-(p_{-1})$, $k_{-2}^+(p_{-2})$ und $k_{-2}^-(p_{-2})$

(die Argumente $p_0$, $p_{-1}$ und $p_{-2}$ werden im folgenden weggelassen) werden in einer Verknüpfungsstufe V verknüpft (inference) und Gewichtungsgrössen $g^-$, $g^0$ und $g^+$ aus ihnen abgeleitet. Dazu werden jeweils zuerst durch Bildung von Minima über Teilmengen der Menge der Klassifizierungsgrössen Zwischengrössen hergestellt, dieselben z. T. skaliert, d. h. mit festen Faktoren, im vorliegenden Fall $\leq 1$, multipliziert und dann jeweils durch Bildung von Maxima über Zwischengrössen die Gewichtungsgrössen hergestellt. Im einzelnen:

$$g^- = \max\,[0{,}5\,\min(k_0{}^+, k_{-1}{}^-, k_{-2}{}^-),$$
$$0{,}2\,\min(k_0{}^-, k_{-1}{}^+, k_{-2}{}^+),$$
$$0{,}2\,\min(k_0{}^-, k_{-1}{}^+, k_{-2}{}^-)]$$

$$g^0 = \max\,[0{,}5\,\min(k_0{}^+, k_{-1}{}^+, k_{-2}{}^-),$$
$$0{,}5\,\min(k_0{}^+, k_{-1}{}^-, k_{-2}{}^-),$$
$$0{,}2\,\min(k_0{}^-, k_{-1}{}^+, k_{-2}{}^-),$$
$$0{,}6\,\min(k_0{}^-, k_{-1}{}^-, k_{-2}{}^+)]$$

$$g^+ = \max\,[1{,}0\,\min(k_0{}^-, k_{-1}{}^+, k_{-2}{}^-)]$$

Offensichtlich wird jedes der Minima, die zu einer Zwischengrösse führen, über ein Tripel von Klassifizierungsgrössen gebildet, welches jeweils aus von den verschiedenen Messwerten $p_0$, $p_{-1}$ bzw. $p_{-2}$ abgeleiteten Klassifizierungsgrössen zusammengesetzt ist. Insbesondere tritt immer eine der beiden vom aktuellen Messwert $p_0$ abgeleiteten Klassifizierungsgrössen $k_0{}^+$, $k_0{}^-$ als Argument auf.

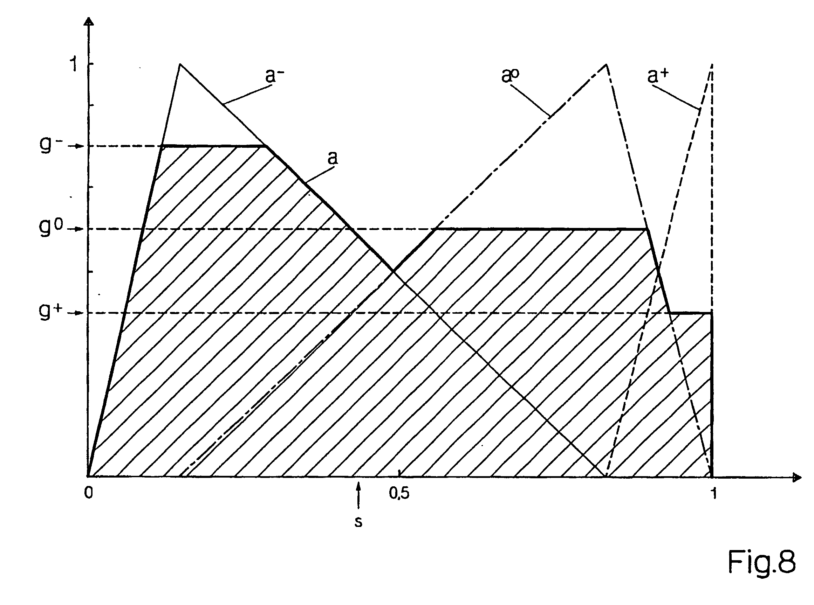

In einer Auswertungsstufe A wird nun aus den Gewichtungsgrössen $g^-$, $g^0$ und $g^+$ ein reeller, im vorliegenden Fall zwischen 0 und 1 liegender Schaltwert s abgeleitet (defuzzification). Dazu werden die Gewichtungsgrössen $g^-$, $g^0$ und $g^+$ mit festen Auswertungsfunktionen $a^-$, $a^0$ bzw. $a^+$ (Fig. 8) verknüpft. Die Graphen der Auswertungsfunktionen haben in x-Richtung deutlich gegeneinander versetzte Flächenschwerpunkte, d. h. der Median, entsprechend der x-Komponente des Flächenschwerpunkts, ist bei $a^+$ deutlich grösser als bei a° und bei a° wesentlich grösser als bei $a^-$. Die Träger der Funktionen sind ebenfalls entsprechend verschoben, obwohl sie breit überlappen. Die Auswertungsfunktionen sind im vorliegenden Fall sehr einfach. Sie steigen durchwegs linear von 0 auf 1 und fallen dann ebenfalls linear von 1 auf 0 ab.

Die Verknüpfung der Gewichtungsgrösse $g^+$ mit der Auswertungsfunktion $a^+$ zu einer modifizierten Auswertungsfunktion erfolgt einfach durch Abschneiden der letzteren beim Wert der Gewichtungsgrösse $g^+$,

d. h. es wird das Minimum der Auswertungsfunktion $a^+$ und einer konstanten Funktion mit dem Wert $g^+$ gebildet. Bei den Auswertungsfunktionen $a^0$ und $a^-$ wird analog vorgegangen. Aus den so modifizierten Auswertungsfunktionen wird schliesslich durch Maximumbildung eine Schaltfunktion a gebildet, deren Graph folglich die Vereinigungsmenge der Graphen der modifizierten Auswertungsfunktionen entspricht.

Zur Bestimmung des Schaltwerts s wird nun der Median der Schaltfunktion s entsprechend der x-Komponente ihres Flächenschwerpunkts gebildet. Es ist offensichtlich, dass jede Auswertungsfunktion den Schaltwert umso mehr im Sinne einer Verschiebung gegen ihren eigenen Median beeinflusst, je grösser die zugeordnete Gewichtungsgrösse ist.

Liegt der Schaltwert s unter einem Schwellwert von 0,5, so wird schliesslich in einer Entscheidungsstufe E (Fig. 6) abgeleitet, dass der Umschaltpunkt noch nicht erreicht ist. Ueberschreitet der Schaltwert dagegen den Schwellwert, so wird daraus abgeleitet, dass der Umschaltpunkt erreicht und auf das Nachdruckprogramm umgeschaltet ist.

Mit Klassifizierungsfunktionen, Verknüpfungsregeln und Auswertungsfunktionen und -methoden wie oben angegeben wurden auf einem breiten Anwendungsgebiet sehr gute Resultate erzielt. Es sind jedoch auch weitgehende Abweichungen von dem geschilderten Beispiel möglich. Insbesondere kann weitere Optimierung und Anpassung an spezifische Anwendungen zu einer in Einzelheiten abweichenden algorithmischen Verarbeitung der Messwerte führen. Es ist auch möglich, eine andere Zahl oder Auswahl von Messwerten in die Verarbeitung einzubeziehen.

**Patentansprüche**

1. Verfahren zur Bestimmung eines Umschaltpunktes (U) bei der Herstellung eines Spritzgussteils, bei welcher mittels einer Einspritzeinrichtung (4) ein Hohlraum (2) einer Spritzgussform (1) bis zum Umschaltpunkt (U) gemäss einem Füllprogramm gefüllt wird und nach dem Umschaltpunkt (U) gemäss einem Nachdruckprogramm ein Druckverlauf im Hohlraum (2) erzeugt wird, indem mehrere aufeinanderfolgende Messungen des Drucks im Inneren des Hohlraums (2) durchgeführt und nach einer Messung jeweils durch algorithmische Verarbeitung des aktuellen Messwerts ($p_0$) und früherer Messwerte ($p_{-1}$, $p_{-2}$) in einer Recheneinheit bestimmt wird, ob der Umschaltpunkt (U) erreicht ist oder nicht, **dadurch gekennzeichnet, dass** die algorithmische Verarbeitung der Messwerte ($p_0$, $p_{-1}$, $p_{-2}$) durch funktionale Verknüpfung von jeweils in einer Klassifizierungsstufe ($K_0$, $K_{-1}$, $K_{-2}$) von denselben abgeleiteten Klassifizierungsgrössen ($k_0{}^+(p_0)$, $k_0{}^-(p_0)$, $k_{-1}{}^+(p_{-1})$, $k_{-1}{}^-(p_{-1})$, $k_{-2}{}^+(p_{-2})$, $k_{-2}{}^-(p_{-2})$) gemäss Methoden der unscharfen Logik erfolgt.

**2.** Verfahren nach Anspruch 1, **dadurch gekennzeichnet, dass** aus einem Messwert ($p_0$; $p_{-1}$; $p_{-2}$) jeweils eine erste Klassifizierungsgrösse ($k_0^+(p_0)$; $k_{-1}^+(p_{-1})$; $k_{-2}^+(p_{-2})$ abgeleitet wird, indem derselbe in einer ersten Klassifizierungsfunktion ($k_0^+$; $k_{-1}^+$; $k_{-2}^+$) ausgewertet wird.

**3.** Verfahren nach Anspruch 2, **dadurch gekennzeichnet, dass** die erste Klassifizierungsfunktion ($k_0^+$; $k_{-1}^+$; $k_{-2}^+$)jeweils bei tiefen Druckwerten einen konstanten Wert hat und in einem mit einem positiven unteren Grenzdruck beginnenden Intervall ansteigt.

**4.** Verfahren nach Anspruch 2 oder 3, **dadurch gekennzeichnet, dass** aus einem Messwert ($p_0$; $p_{-1}$; $p_{-2}$) jeweils eine zweite Klassifizierungsgrösse ($k_0^-(p_0)$; $k_{-1}^-(p_{-1})$; $k_{-2}^-(p_{-2})$) abgeleitet wird, indem derselbe in einer zweiten Klassifizierungsfunktion ($k_0^-$; $k_{-1}^-$; $k_{-2}^-$) ausgewertet wird.

**5.** Verfahren nach den Ansprüchen 3 und 4, **dadurch gekennzeichnet, dass** dass die zweite Klassifizierungsfunktion ($k_0^-$; $k_{-1}^-$; $k_{-2}^-$) jeweils zur ersten Klassifizierungsfunktion ($k_0^+$; $k_{-1}^+$; $k_{-2}^+$) komplementär ist.

**6.** Verfahren nach einem der Ansprüche 3 bis 5, **dadurch gekennzeichnet, dass** der untere Grenzdruck jeweils zwischen 300 bar und 450 bar liegt.

**7.** Verfahren nach einem der Ansprüche 3 bis 6, **dadurch gekennzeichnet, dass** bei der zur Auswertung des aktuellen Messwerts ($p_0$) herangezogenen ersten Klassifizierungsfunktion ($k_0^+$) der untere Grenzdruck tiefer liegt als bei den übrigen ersten Klassifizierungsfunktionen ($k_{-1}^+$, $k_{-2}^+$).

**8.** Verfahren nach einem der Ansprüche 2 bis 7, **dadurch gekennzeichnet, dass** in einer Verknüpfungsstufe (V) aus den Klassifizierungsgrössen ($k_0^+(p_0)$, $k_0^-(p_0)$, $k_{-1}^+(p_{-1})$, $k_{-1}^-(p_{-1})$, $k_{-2}^+(p_{-2})$, $k_{-2}^-(p_{-2})$) mindestens zwei Gewichtungsgrössen ($g^-$, $g^0$, $g^+$) abgeleitet werden.

**9.** Verfahren nach Anspruch 8, **dadurch gekennzeichnet, dass** in der Verknüpfungsstufe (V) aus den Klassifizierungsgrössen ($k_0^+(p_0)$, $k_0^-(p_0)$, $k_{-1}^+(p_{-1})$, $k_{-1}^-(p_{-1})$, $k_{-2}^+(p_{-2})$, $k_{-2}^-(p_{-2})$) drei Gewichtungsgrössen ($g^-$, $g^0$, $g^+$) abgeleitet werden.

**10.** Verfahren nach Anspruch 8 oder 9, **dadurch gekennzeichnet, dass** in der Verknüpfungsstufe durch Minimabildung über Teilmengen der Menge der Klassifizierungsgrössen ($k_0^+(p_0)$, $k_0^-(p_0)$, $k_{-1}^+(p_{-1})$, $k_{-1}^-(p_{-1})$, $k_{-2}^+(p_{-2})$, $k_{-2}^-(p_{-2})$) Zwischengrössen erzeugt werden, aus denen durch weitere Verknüpfung die Gewichtungsgrössen ($g^-$, $g^0$, $g^+$) abgeleitet

werden.

**11.** Verfahren nach Anspruch 10, **dadurch gekennzeichnet, dass** die Teilmenge von Klassifizierungsgrössen, über welche ein Minimum gebildet wird, jeweils mindestens eine der vom aktuellen Messwert ($p_0$) abgeleiteten Klassifizierungsgrössen ($k_0^+(p_0)$; $k_0^-(p_0)$) enthält.

**12.** Verfahren nach Anspruch 10 oder 11, **dadurch gekennzeichnet, dass** die Verknüpfung der Zwischengrössen zu Gewichtungsgrössen ($g^-$, $g^0$, $g^+$) durch Maximumbildung über Teilmengen der Menge der Zwischengrössen nach allfälliger Skalierung der letzteren erfolgt.

**13.** Verfahren nach einem der Ansprüche 8 bis 12, **dadurch gekennzeichnet, dass** in einer Auswertungsstufe (A) aufgrund der Gewichtungsgrössen ($g^-$, $g^0$, $g^+$) ein Schaltwert (s) gebildet wird, aus welchem abgeleitet wird, ob der Umschaltpunkt (U) erreicht ist oder nicht.

**14.** Verfahren nach Anspruch 13, **dadurch gekennzeichnet, dass** in der Auswertungsstufe (A) jeweils aus einer Gewichtungsgrösse ($g^-$; $g^0$; $g^+$) und einer ihr zugeordneten Auswertungsfunktion ($a^-$; $a^0$; $a^+$) - wobei sich die verschiedenen Gewichtungsgrössen zugeordneten Auswertungsfunktionen unterscheiden - eine modifizierte Auswertungsfunktion abgeleitet wird, welche bei gleichem Träger mit dem Wert der Gewichtungsgrösse ($g^-$; $g^0$; $g^+$) wächst und schliesslich eine Schaltfunktion (a) als Maximum der modifizierten Auswertungsfunktionen gebildet wird, aus der der Schaltwert (s) abgeleitet wird.

**15.** Verfahren nach Anspruch 14, **dadurch gekennzeichnet, dass** die Auswertungsfunktionen ($a^-$, $a^0$, $a^+$) sich in ihren Medianen unterscheiden und der Schaltwert (s) durch Bildung des Medians der Schaltfunktion (a) gebildet wird.

**16.** Verfahren nach Anspruch 14 oder 15, **dadurch gekennzeichnet, dass** die modifizierte Auswertefunktion jeweils als Minimum der Auswertefunktion ($a^-$; $a^0$; $a^+$) und der der Gewichtungsgrösse ($g^-$; $g^0$; $g^+$) entsprechenden konstanten Funktion bestimmt wird.

**17.** Verfahren nach einem der Ansprüche 13 bis 16, **dadurch gekennzeichnet, dass** aus dem Schaltwert (s) genau dann abgeleitet wird, dass der Umschaltpunkt (U) erreicht ist, wenn derselbe einen Schwellwert überschreitet.

**18.** Verfahren nach einem der Ansprüche 1 bis 17, **dadurch gekennzeichnet, dass** zur Bestimmung, ob der Umschaltpunkt (U) erreicht ist oder nicht, neben dem aktuellen Messwert ($p_0$) die beiden letzten davor erhobenen Messwerte ($p_{-1}$, $p_{-2}$) herangezogen werden.

19. Verfahren nach einem der Ansprüche 1 bis 18, **dadurch gekennzeichnet, dass** die Messwerte in regelmässigen zeitlichen Abständen erhoben werden.

20. Verfahren nach einem der Ansprüche 1 bis 19, **dadurch gekennzeichnet, dass** der zeitliche Abstand zwischen zwei aufeinanderfolgenden Messungen nicht grösser als 20 msec ist.


**Claims**

1. A method for determining the changeover point (U) when
producing plastic injection mouldings or die castings, where an injection device (4) serves to fill a cavity (2) in a mould (1) up to the changeover point (U) according to a filling program, then after the changeover point (U) a pressure curve is set up in the cavity according to a hold pressure program, by performing several successive measurements of the pressure inside the cavity (2) and after each measurement deciding by algorithmic processing of the current measured value (p0) and of previous measured values (p-1, p-2) in a computer whether the changeover point (U) has been reached or not, **characterized by** the algorithmic processing of the measured values (p0, p-1, p-2) being accomplished by functional combination of classification variables (k0+(p0), k0-(p0), k-1 +(p-1), k-1-(p-1), k-2+(p-2), k-2-(p-2) derived in a classification stage (K0, K-1, K-2) from these, using the methods of fuzzy logic.

2. Method according to claim 1, **characterized by** a first classification variable (k0+(p0); k-1+(p-1); k-2+ (p-2) being derived from a measured value (p0; p-1; p-2), in which evaluation is accomplished in a first classification function (k0+; k-1+; k-2+).

3. Method according to claim 2, **characterized by** the first classification function (k0+; k-1+; k-2+) having a constant value at low pressures and rising within an interval beginning with a positive lower limit pressure.

4. Method according to claim 1 or 2, **characterized by** a second classification variable (k0-(p0); k-1-(p-1); k-2-(p-2) being derived from a measured value (p0; p-1; p-2), by evaluating it in a second classification function (ko-; k-1-); k-2-)

5. Method according to claims 3 and 4, **characterized by** the second classification function (ko-; k-1-); k-2-) being complementary to the first one (k0+; k-1+; k-2+).

6. Method according to one of claims 3 to 5, **characterized by** the lower limit pressure lying between 300 bar and 450 bar.

7. Method according to one of claims 3 to 6, **characterized by** the lower limit pressure used when evaluating the current measured value (p0 with the first classification function (k0+) being lower than for the other first classification functions (k-1+, k-2+).

8. Method according to one of claims 2 to 7, **characterized by** at least two weighting variables (g-, g0, g+) being derived from the classification variables (k0+(p0), k0-(p0), k-1+(p-1), k-1-(p-1), k-2+(p-2), k-2-(p-2) in a combination stage (V).

9. Method according to claim 8, **characterized by** three weighting variables (g-, g0, g+) being derived from the classification variables (k0+(p0), k0-(p0), k-1+(p-1), k-1-(p-1), k-2+(p-2), k-2-(p-2) in the combination stage (V).

10. Method according to claim 8 or 9, **characterized by** the generation of intermediate variables in the combination stage by forming minima via part magnitudes of the magnitude of the classification variables (k0+(p0), k0-(p0), k-1+(p-1), k-1-(p-1), k-2+(p-2), k-2-(p-2) and by further combination yielding the weighting variables (g-, g0, g+).

11. Method according to claim 10, **characterized by** the part magnitude of the classification variables through which a minimum is formed including at least one classification variable (k0+(p0), k0-(p0) derived from the current measured valve (p0).

12. Method according to claim 10 or 11, **characterized by** the combination of intermediate variables into weighting variables (g-, g0, g+) being accomplished by forming maxima via part magnitudes of the magnitude of the intermediate variables after possible scaling of these.

13. Method according to one of claims 8 to 12, **characterized by** a switching value (s) being formed in an evaluation stage (A) on the basis of the weighting variables (g-, g0, g+), from which is derived whether the changeover point (U) has been reached or not.

14. Method according to claim 13, **characterized by** a modified evaluation function being derived in the evaluation stage (A) from a weighting variable (g-, g0, g+) and an evaluation function (a-; a0; a+) allotted to it, whereby the evaluation functions allotted to various weighting variables differ. The value of the weighting variable (g-, g0, g+) grows with the same carrier till ultimately a switching function (a) is formed as maximum of the modified evaluation functions from which the switching value (s) is derived.

15. Method according to claim 14, **characterized by** the evaluation functions (a-, a0, a+) differing in their medians, and the switching value (s) being formed by taking the median of the switching function (a).

16. Method according to claim 14 or 15, **characterized by** the modified evaluation function being determined as minium of the evaluation function (a-, a0, a+) and the constant function corresponding to the weighting variable (g-, g0, g+).

17. Method according to claims 13 to 16, **characterized by** the switching value (s) being derived at the exact instant when the changeover point (U) is reached, when this crosses a threshold.

18. Method according to one of claims 1 to 17, **characterized by** taking the two previous measured values (p-1, p-2) in addition to the current measured value (p0) to determine whether the changeover point (U) has been reached or not.

19. Method according to one of claims 1 to 18, **characterized by** the measured values being registered at regular time intervals.

20. Method according to one of claims 1 to 19, **characterized by** the time interval between two successive measurements not exceeding 20 msec.

**Revendications**

1. Procédés pour la détermination du point de commutation (u) lors de la fabrication d'une pièce injectée, au cours duquel un dispositif d'injection (4) remplit une cavité (2) d'un moule (1) jusqu'au point de commutation (u) selon un programme de remplissage et une évolution de pression est engendrée, conformément à un programme de maintien de pression, après le point de commutation (u) en effectuant plusieurs mesures successives de la pression à l'intérieur de la cavité (2) et après chaque mesure il est détérminé par un traitement algorithmique de la valeur de mesure actuelle ($p_o$) et des valeurs de mesure antérieures ($p_{-1}$, $p_{-2}$) dans un calculateur si le point de commutation (u) est atteint ou pas,
**caractérisés en ce que** le traitement algorithmique des valeurs de mesure ($p_o$, $p_1$, $p_2$) s'effectue par convexion fonctionnel des grandeurs de classifica-

tion [$k_o^+$ ($p_o$), $k_o^-$ ($p_o$), $k_{-1}^+$ ($p_{-1}$), $k_{-1}^-$($p_1$), $k_{-2}^+$ ($p_{-2}$), $k_{-2}^-$ ($p_{-2}$)] déduites respectivement d'un étage de classification ($k_o$, $k_{-1}$, $k_{-2}$) selon des méthodes de la logique floue.

2. Procédés selon revendication 1 **caractérisés en ce qu'**à partir d'une valeur de mesure ($p_o$, $p_{-1}$, $p_{-2}$) une première grandeur de classification est déterminée [$k_o^+$ ($p_o$), $k_{-1}^+$ ($p_{-1}$), $k_{-2}^+$ ($p_{-2}$)] en traitant cette valeur dans une première fonction de classification ($k_o^+$, $k_{-1}^+$, $k_{-2}^+$).

3. Procédés selon revendication 2 **caractérisés en ce que** la première
fonction de classification ($k_o^+$, $k_{-1}^+$, $k_{-2}^+$) a une valeur constante pour les faibles valeurs de pression et augmente dans un intervalle débutant à une pression-limite inférieure positive.

4. Procédés selon revendications 2 ou 3 **caractérisés en ce qu'**une deuxième grandeur de classification [$k_o^-$ ($p_o$), $k_{-1}^-$ ($p_{-1}$), $k_{-2}^-$ ($p_{-2}$)] est déduite d'une valeur de mesure ($p_o$, $p_{-1}$, $p_{-2}$) en traitant cette valeur dans une deuxième fonction de classification ($k_o^-$, $k_{-1}^-$, $k_{-2}^-$).

5. Procédés selon revendication 3 et 4 **caractérisés en ce que** la deuxième fonction de classification ($k_o^-$, $k_{-1}^-$, $k_{-2}^-$) est respectivement complémentaire de la première fonction de classification ($k_o^+$, $k_{-1}^+$, $k_{-2}^+$).

6. Procédés selon l'une des revendications 3 à 5 **caractérisés en ce que** la pression-limite inférieure se situe, selon le cas, entre 300 et 450 bar.

7. Procédés selon l'une des revendications 3 à 6 **caractérisés en ce que** pour la première fonction de classification utilisée pour traiter la valeur de mesure actuelle ($p_o$) la pression-limite inférieure est plus basse que pour les autres premières fonctions de classification ($k_{-1}^+$, $k_{-2}^+$).

8. Procédés selon l'une des revendications 2 à 7 **caractérisés en ce que** au moins deux grandeurs de pondération ($g^-$, $g^o$, $g^+$) sont déterminées à partir des grandeurs de classification [$k_o^+$ ($p_o$), $k_o^-$ ($p_o$), $k_{-1}^+$ ($p_{-1}$), $k_{-1}^-$ ($p_{-1}$), $k_{-2}^+$ ($p_{-2}$), $k_{-2}^-$ ($p_{-2}$)] dans un étage de couplage v.

9. Procédés selon revendication 8 **caractérisés en ce que**, dans l'étage de couplage (v), trois grandeurs de pondération ($g^-$, $g^o$, $g^+$) sont déduites des grandeurs de classification [$k_o^+$ ($p_o$), $k_o^-$ ($p_o$), $k_{-1}^+$ ($p_{-1}$), $k_{-1}^-$ ($p_{-1}$), $k_{-2}^+$ ($p_{-2}$), $k_{-2}^-$ ($p_{-2}$)].

10. Procédés selon revendication 8 ou 9 **caractérisés en ce que** dans l'étage de couplage, des grandeurs intermédiaires sont créées par formation de minimas par des quantités partielles de la quantité des grandeurs de classification [$k_o^+$ ($p_o$), $k_o^-$ ($p_o$), $k_{-1}^+$ ($p_{-1}$), $k_{-1}^-$ ($p_{-1}$), $k_{-2}^+$ ($p_{-2}$), $k_{-2}^-$ ($p_{-2}$)] à partir desquelles les grandeurs de pondération ($g^-$, $g^o$, $g^+$) peuvent être déduites.

**11.** Procédés selon revendication 10 **caractérisés en ce que** les quantités partielles de grandeurs de classification à partir desquelles un minima est formé, contiennent au moins une des grandeurs de classification [$k_o^+$ ($p_o$), $k_o^-$ ($p_o$)] déduite de la valeur de mesure actuelle ($p_o$).

**12.** Procédés selon revendication 10 ou 11 **caractérisés en ce que** le couplage des grandeurs intermédiaires relatives aux grandeurs de pondération ($g^-$, $g^o$, $g^+$) s'effectue par formation de maxima à partir de quantités partielles de la quantité des grandeurs intermédiaires après une graduation occasionnelle de ces dernières.

**13.** Procédés selon revendication 8 à 12 **caractérisés en ce que**, dans un étage de traitement (A), une valeur de commutation (s) est formée à partir des grandeurs de pondération ($g^-$, $g^o$, $g^+$), valeur à partir de laquelle il est déduit si le point de commutation (u) est atteint ou non.

**14.** Procédés selon revendication 13 **caractérisés en ce que** dans l'étage de traitement (A) une fonction de traitement modifiée est selon le cas déduite d'une grandeur de pondération ($g^-$, $g^o$, $g^+$) et d'une fonction de traitement modifiée ($a^-$, $a^o$, $a^+$) qui lui est attribuée, les fonctions de traitement attribuées à différentes grandeurs de pondération étant différentes entre elles, fonction qui, pour le même vecteur, croit avec la grandeur de pondération ($g^-$, $g^o$, $g^+$) et que finalement, une fonction de commutation (a) est obtenue comme maxima des fonctions de traitement modifiées à partir de laquelle la valeur de commutation (s) est déduite.

**15.** Procédés selon revendication 14 **caractérisés en ce que** les fonctions de traitement ($a^-$, $a^o$, $a^+$) se différencient par leurs points médians et que la valeur de commutation (s) est formée par formation du point médian de la fonction de commutation (a).

**16.** Procédés selon revendication 14 ou 15 **caractérisés en ce que** la fonction de traitement modifiée est considérée comme minima de la fonction de traitement ($a^-$, $a^o$, $a^+$) et celui de la fonction de pondération ($g^-$, $g^o$, $g^+$) considéré comme fonction constante correspondante.

**17.** Procédés selon l'une des revendications 13 à 16 **caractérisés en ce qu'**à partir de la valeur de commutation (s) il peut être exactement déduit que le point de commutation (u) est atteint lorsque ce dernier dépasse une valeur de seuil.

**18.** Procédés selon l'une des revendications 1 à 17 **caractérisés en ce que** pour déterminer si le point de commutation (u) est atteint ou pas, non seulement la valeur de mesure actuelle ($p_o$) mais aussi les deux dernières valeurs de mesure relevées ($p_{-1}$, $p_{-2}$) sont prises en considération.

**19.** Procédés selon l'une des revendications 1 à 18 **caractérisés en ce que** les valeurs de mesure sont relevées à des intervalles de temps réguliers.

**20.** Procédés selon l'une des revendications 1 à 19 **caractérisés en ce que** l'intervalle de temps entre deux mesures consécutives ne dépasse pas 20 msec.

Fig.1

Fig.2a

Fig.2b

Fig.3a

Fig.3b

Fig.4a

Fig.4b

Fig.5a

Fig.5b

$p_0$ → $K_0$ → $k_0^+$, $k_0^-$

$p_{-1}$ → $K_{-1}$ → $k_{-1}^+$, $k_{-1}^-$

$p_{-2}$ → $K_{-2}$ → $k_{-2}^+$, $k_{-2}^-$

V → $g^+$, $g^0$, $g^-$ → A → s → E → $\begin{smallmatrix}1\\0\end{smallmatrix}$

Fig.6

EP 0 707 936 B1

Fig.7a

Fig.7b

Fig.8